# EUROPÄISCHE PATENTSCHRIFT

(11) **EP 1 932 733 B1**
(45) Veröffentlichungstag und Bekanntmachung des Hinweises auf die Patenterteilung: **14.10.2009**
(21) Anmeldenummer: 07021068.7
(22) Anmeldetag: 27.10.2007
(51) Int. Cl.: B60R 25/00, G07C 9/00

(54) **Verfahren zum Realisieren eines schlüssellosen Zugangs von zumindest einer Fahrzeugtür**
Method for implementing keyless access to at least one vehicle door
Procédé de réalisation d'un accès sans clé d'au moins une portière de véhicule

(30) Priorität: 13.12.2006 DE 102006058723
(43) Veröffentlichungstag der Anmeldung: 18.06.2008
(73) Patentinhaber: Dr. Ing. h.c. F. Porsche Aktiengesellschaft, 70435 Stuttgart (DE)
(72) Erfinder: Eichin, Matthias, 74382 Neckarwestheim (DE)

(56) Entgegenhaltungen:
- EP-A- 1 479 575
- DE-A1- 10 226 684
- DE-A1- 10 234 231

## Beschreibung

Die Erfindung betrifft ein Verfahren zum Realisieren eines schlüssellosen Zugangs von zumindest einer Fahrzeugtür an einem Kraftfahrzeug, wobei das Zugangssystem zumindest ein zentrales Steuergerät zum Senden und Empfangen von Steuersignalen, zumindest ein einer ersten Fahrzeugtür zugeordnetes Türsteuergerät zum Entriegeln oder Verriegeln einer Fahrzeugtür, zumindest einen ersten Näherungssensor zum Erfassen eines in unmittelbarer Nähe des ersten Näherungssensors befindlichen Objekts und zumindest ein zentralen Steuergerät umfasst und wobei der Näherungssensor von einem zentralen Steuergerät abgefragt und bei Ansprechen eine Authentifikation initiiert. Ein solches Verfahren ist bereits aus der DE 102 26 684 A1 bekannt. Bei diesem bekannten Verfahren ist ein Näherungssensor integriert, welcher beim Erfassen eines Objektes in unmittelbarer Nähe ein Steuersignal ausgibt, so dass das Türsteuergerät von einem ersten in einen zweiten Betriebszustand überführt wird.

Bei bekannten schlüssellosen Zugangssystemen wird bei einer positiven Identifikation das gesamte System des Fahrzeuges vorzugsweise ein Bus-System vollständig in den Wachzustand gebracht und eine Zentralverriegelungsvorrichtung des Kraftfahrzeugs freigeschaltet so dass nun die Fahrzeugtüren entriegelt werden. Der gesamte Vorgang von der Annäherung an den Türgriff bis zur Entriegelung der Fahrzeugtüren kann bis zu mehreren 100 ms dauern.

Bei weiteren bekannten Systemen wird ein Näherungssensor von einem zentralen Steuergerät abgefragt wird und bei Erkennung beispielsweise einer Hand in Nähe des Türgriffs ein Antennensystem angesteuert, welches prüft, ob sich ein gültiger Schlüssel in Nähe der zu öffnenden Tür befindet. Ist die Prüfung positiv bestätigt, weckt das zentrale Steuergerät ein Bussystem und sendet dann zyklisch eine Botschaft zum Entriegeln der Tür.

Dies kann eine vordere Tür oder eine hintere Tür sein. In dem zweiten Fall wird das vordere Türsteuergerät als Mastereinheit das hintere Türsteuergerät als Slaveeinheit, oder umgekehrt, wecken und dann die Entriegelbotschaft an das Türsteuergerät hinten durchreichen bzw. routen. Dieser sequentielle Ablauf erfordert einen Zeitaufwand, der ein rasches Türöffnen nicht möglich macht bedingt dadurch, dass das verriegelte Schloss u.U. nicht so schnell, wie gewünscht, entriegelt werden kann.

Ausgehend von diesem Stand der Technik ist es Aufgabe der vorliegenden Erfindung, ein Zugangssystem zu schaffen, welches eine deutliche Beschleunigung dieses Vorgangs ermöglicht.

Diese Aufgabe wird durch ein Verfahren mit den Merkmalen des Hauptanspruchs gelöst.

Vorteilhafte Ausgestaltungen der Erfindung sind Gegenstand der Unteransprüche. Das erfindungsgemäße Zugangssystem hat den Vorteil, dass ein erstes Türsteuergerät von einem Näherungssensor mit einem Steuerungssignal ansteuerbar ist, ohne das gesamte Bussystem zu wecken.

Es wird also nur das entsprechende Türsteuergerät bzw. ein das zentrale Steuergerät geweckt, welches dann gegebenenfalls den Datenaustausch mit beispielsweise einem ID-Geber durchführt. Sendet das zentrale Steuergerät nun die Entriegelungsbotschaft, kann aufgrund des Systemzustandes des entsprechenden Türsteuergerätes die Botschaft sofort umgesetzt und das Schloss entriegelt werden. Wird nach dem Erkennen einer sich nähernden Hand kein Schlüssel erkannt und damit keine Entriegelungsbotschaft gesendet, kann das Steuergerät nach einiger Zeit wieder in den Schlafmodus versetzt werden. Der wesentliche Unterschied besteht also darin, dass durch die Ansteuerung des Türsteuergeräts mittels des entsprechenden Näherungssensors lediglich das Türsteuergerät "lokal" geweckt wird und nicht das ganze System.

Eine weiterer Vorteil besteht darin, dass das Zugangssystem ein einer zweiten Fahrzeugtür zugeordnetes zweites Türsteuergerät umfasst, wobei ein erstes Türsteuergerät ausgelegt ist um Türsteuersignale auszugeben, mit denen ein zweites Türsteuergerät ansteuerbar ist, wobei das zweite Türsteuergerät ausgelegt ist, um die Türsteuersignale zu empfangen und um durch die Türsteuersignale von einem ersten Betriebszustand in einen zweiten Betriebszustand überführt zu werden. Für diesen Fall wird das Türsteuergerät beispielsweise einer hinteren Tür ebenfalls mit einem entsprechenden dazugehörigen Näherungssensor verbunden. Spricht dieser an, weckt der Näherungssensor das hintere Türsteuergerät, welches als Slaveeinheit die Mastereinheit, also das Türsteuergerät vorne weckt. Der Datenaustausch mit dem Steuergerät wie auch das Durchreichen der Entriegelbotschaft, wird in diesem Fall schneller durchgeführt, da das Aufwachen beider Steuergeräte parallel mit der Schlüsselprüfung stattfindet. Wird kein gültiger Schlüssel erkannt und daher keine Entriegelbotschaft gesendet, schlafen die Steuergeräte nach einiger Zeit, beispielsweise 5 Sekunden, wieder ein.

Ebenso besteht ein weiterer Vorteil der Erfindung darin, dass das Zugangssystem ein Bussystem umfasst, das mit dem zentralen Steuergerät und/oder zumindest einem Türsteuergerät in Wirkverbindung steht, wobei zwischen dem Näherungssensor und dem Türsteuergerät eine Übertragungsstrecke eingerichtet ist, über die die Steuerungssignale übertragbar sind, und wobei die Übertragungsstrecke nicht über das Bussystem geleitet wird. D.h. spricht der Näherungssensor an wird das entsprechende Türsteuergerät geweckt. Nicht jedoch in der Art und Weise wie bisher bekannt, nämlich das dass Türsteuergerät das Bussystem mitweckt, sondern dann nur lokal arbeitet, die Busruhe also beibehalten wird. Der Unterschied besteht also darin, dass nicht das gesamte Bussystem geweckt wird, sondern lediglich das Türsteuergerät den Entriegelungsvorgang erkennt und ausführt.

Im Folgenden wird die Erfindung anhand lediglich Ausführungsbeispiele zeigender Zeichnungen näher erläutert. Es zeigen:
- Fig. 1: eine vereinfachte Darstellung eines Zugangssystems in einem Kraftfahrzeug;
- Fig. 2: Zugangsverfahren Tür vorne gem. Stand der Technik;
- Fig. 3: Zugangsverfahren Tür hinten gem. Stand der Technik;
- Fig. 4: Zugangsverfahren Tür vorne gern. neuem Verfahren;
- Fig.: 5 Zugangsverfahren Tür hinten gem. neuem Verfahren.

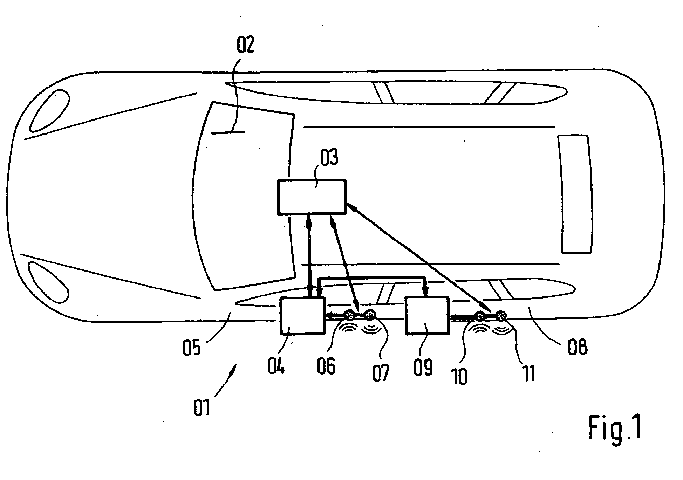

Fig. 1 zeigt die vereinfachte Anordnung bzw. Darstellung eines schlüssellosen Zugangssystems 01 in einem schematisch dargestellten Kraftfahrzeug 02. Das Zugangssystem 01 umfasst hierbei ein zentrales Steuergerät 03, ein erstes Türsteuergerät 04, wobei das Türsteuergerät 04 der vorderen Fahrzeugtür 05 zugeordnet ist, einen dem ersten Türsteuergerät 04 zugeordneten Näherungssensor 06, ein neben dem Näherungssensor 06 angeordnetes Prüf- bzw. Antennensystem 07, sowie ein einer hinteren Fahrzeugtür 08 zugeordnetes hinteres Türsteuergerät 09, mit einem Näherungssensor 10 und einem Prüf- bzw. Antennensystem 11.

Das Türsteuergerät 04 ist mit dem Näherungssensor 06 verbunden bzw. wird von diesem angesteuert, und das Türsteuergerät 09 ist mit dem Näherungssensor 10 verbunden bzw. wird von diesem angesteuert. Spricht beispielsweise der vordere Näherungssensor 06 an, wird das vordere Türsteuergerät 04 geweckt. Daraufhin wird über das zentrale Steuergerät 03 das Prüf bzw. Antennensystem 07 bestromt, welches prüft, ob sich ein gültiger Schlüssel in der Nähe der zu öffnenden Tür 05 befindet. Sendet nun das zentrale Steuergerät 03 die Entriegelbotschaft, kann aufgrund des Systemzustands des vorderen Türsteuergeräts 04 die Botschaft sofort umgesetzt und das Schloss entriegelt werden.

Für den Fall des Zugangs der hinteren Fahrzeugtür 08, wird das hintere Türsteuergerät 09 mit dem zugehörigen Näherungssensor 10 verbunden. Spricht der Näherungssensor 10 an, weckt er das hintere Türsteuergerät 09, welches als Slaveeinheit die Mastereinheit vorne, also das Türsteuergerät 04 weckt. Das Türsteuergerät 04 wiederum ist mit dem zentralen Steuergerät 03 verbunden. Das Aufwachen der Steuergeräte 04, 09 findet also parallel mit der Schlüsselprüfung statt. Wird kein gültiger Schlüssel erkannt und daher keine Entriegelbotschaft gesendet, schlafen die Steuergeräte 03, 04 und 09 nah einer Zeit wieder ein.

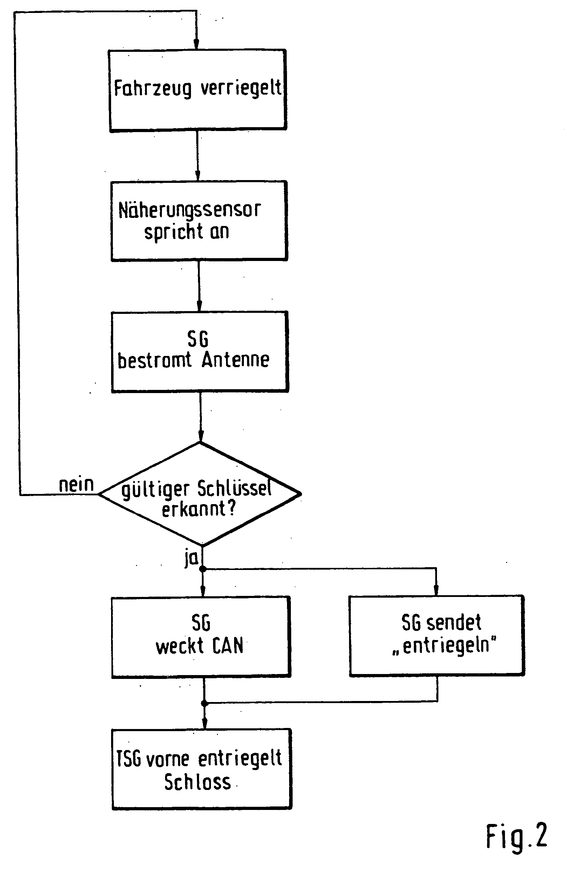

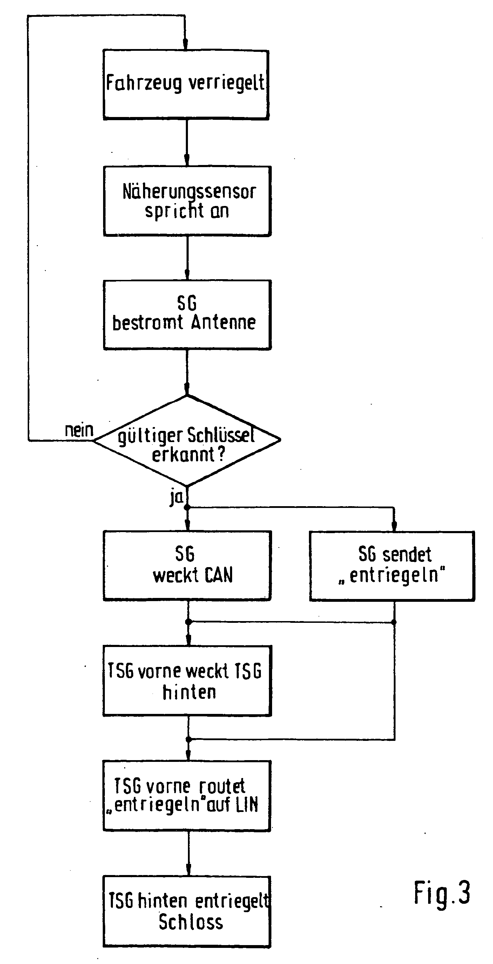

Fig. 2 zeigt ein Flussdiagramm bzw. ein Zugangsverfahren für eine vordere Fahrzeugtür wie aus dem Stand der Technik bekannt. Wesentliche Merkmale dieses Verfahrens sind, dass ein Näherungssensor von einem zentralen Steuergerät (SG) abgefragt wird und dieser bei Erkennung eines Objekts, beispielsweise einer Hand, in Nähe des vorderen Türgriffs ein Antennensystem ansteuert, welches prüft, ob sich ein gültiger Schlüssel in der Nähe der zu öffnenden Tür befindet. Wird dies positiv bestätigt, weckt das zentrale Steuergerät ein CAN (Controller-Area-Network) vernetztes Bussystem und sendet dann zyklisch eine Botschaft zum Entriegeln der Tür. Wie in Fig. 2 dargestellt kann das eine vordere Tür (CAN-vernetzt), oder wie im Diagramm der Fig. 3 dargestellt eine LINvernetzte (Local Interconnect Network) Tür sein. Wie im zweiten Diagramm der Fig. 3 gezeigt, muss das vordere Türsteuergerät (TSG-vorne) als LIN-Mastereinheit das hintere Türsteuergerät (TSG-hinten) als LIN-Slaveeinheit wecken und dann die Entriegelbotschaft an das Türsteuergerät hinten durchreichen (routen). Dieser sequentielle Ablauf erfordert einen hohen Zeitaufwand, der ein rasches Türöffnen nicht möglich macht.

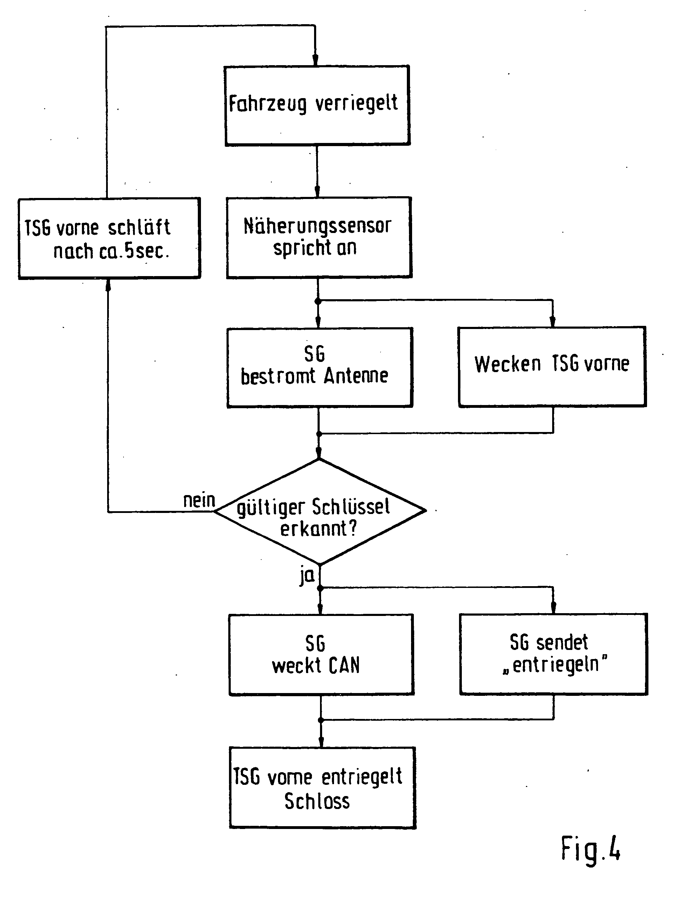

Das neue Zugangsverfahren gemäß dem Diagramm der Fig. 4 offenbart eine deutliche Beschleunigung dieses Zugangs. Hierbei wird der in der Tür angeordnete Näherungssensor mit dem jeweiligen Türsteuergerät verbunden. Spricht der Sensor an wird das Türsteuergerät vorne geweckt, jedoch nicht in der Art und Weise wie in den Diagrammen der Fig. 2 und Fig. 3 beschrieben, wonach das Türsteuergerät das Bussystem mitweckt, sondern lediglich lokal, so dass das Bussystem weiterhin in einem Schlafmodus ist. Sendet nun das zentrale Steuergerät die Entriegelbotschaft, kann aufgrund des Systemzustands des vorderen Türsteuergeräts die Botschaft sofort umgesetzt und das Schloss entriegelt werden.

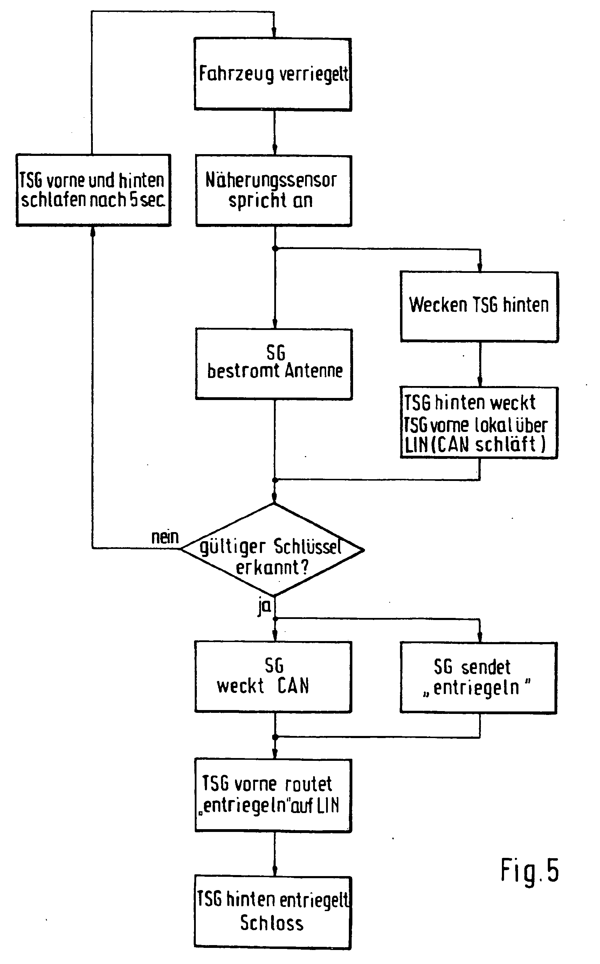

Für den Fall des Zugangs einer hinteren Tür, dargestellt und gezeigt im Diagramm Fig. 5, wird ebenfalls das hintere Türsteuergerät mit dem zugehörigen Näherungssensor verbunden. Spricht dieser an, weckt er das hintere Türsteuergerät, welches als LIN-Slaveeinheit die LIN-Mastereinheit, also das Türsteuergerät vorne weckt, wobei wiederum wie im Diagramm Fig. 4 bereits beschrieben, die Busruhe beibehalten wird.

Der Empfang vom zentralen Steuergerät, als auch das Durchreichen der Entriegelbotschaft, wird in diesem fall schneller durchgeführt, da das Aufwachen beider Steuergeräte parallel mit der Schlüsselprüfung stattfindet (siehe Fig. 5).

Wird kein gültiger Schlüssel erkannt und daher keine Entriegelbotschaft gesendet, schlafen die Steuergeräte nach einer zeit (z.B. 5 Sekunden) wieder ein.

Die hier dargestellten schematischen Zugangsverfahren bzw. Systeme wurden voranstehend an lediglich einem Ausführungsbeispiel beschrieben. Es versteht sich, dass zahlreiche Änderungen sowie Abwandlungen möglich sind, ohne dass dadurch der der Neuerung zugrunde liegende Erfindungsgedanke verlassen wird.

## Patentansprüche

1. Verfahren zum Realisieren eines schlüssellosen Zugangs von zumindest einer Fahrzeugtür (05, 08) mittels eines Zugangssystems (01) umfassend zumindest ein zentrales Steuergerät (03) zum Senden und Empfangen von Steuersignalen, zumindest ein Türsteuergerät (04, 09) zum Entriegeln und/oder Verriegeln einer Fahrzeugtür (05, 08), zumindest einen Näherungssensor (06, 10) zum erfassen eines in unmittelbarer Nähe des Näherungssensors (06, 10) befindlichen Objekts, wobei der Näherungssensor (06, 10) beim Erfassen des Objekts ein Steuerungssignal ausgibt, sowie ein zumindest mit dem zentralen Steuergerät (03) kommunizierendes Prüfsystem (07, 11) zur Authentifikation eines Identifikationsgebers, wobei das Türsteuergerät (04, 09) vom Näherungssensor (06, 10) mit dem Steuerungssignal angesteuert wird, dergestalt, dass das Türsteuergerät (04, 09) von einem ersten Betriebszustand in einen zweiten Betriebszustand überführt wird, **dadurch gekennzeichnet, dass** das Zugangssystem (01) zumindest einen weiteres Türsteuergerät (04, 09) umfasst, wobei nach erfolgter Ansteuerung eines ersten Türsteuergeräts (09) ein zweites Türsteuergerät (04) durch Steuersignale des ersten Türsteuergeräts (09) angesteuert wird, und wobei nach erfolgter Ansteuerung auch das zweite Türsteuergerät (04) von einem ersten Betriebszustand in einen zweiten Betriebszustand überführt wird.

2. Verfahren nach Anspruch 1, **dadurch gekennzeichnet, dass** das Bussystem mit dem zentralen Steuergerät (03) und/oder zumindest einem Türsteuergerät (04, 09) in Wirkverbindung steht, wobei das Steuerungssignal ohne über das Bussystem geleitet zu werden an zumindest ein Türsteuergerät (04, 09) übertragen wird, dergestalt, dass das Bussystem während der Ansteuerung zumindest eines Türsteuergeräts (04, 09) im Ruhezustand verbleibt.

## Claims

1. Method for implementing keyless access to at least one vehicle door (05, 08) by means of an access system (01) comprising at least one central control unit (03) for transmitting and receiving control signals, at least one door control unit (04, 09) for unlocking and/or locking a vehicle door (05, 08), at least one proximity sensor (06, 10) for sensing an object located in the direct vicinity of the proximity sensor (06, 10), wherein the proximity sensor (06, 10) outputs a control signal when the object is sensed, and a check system (07, 11) which communicates at least with the central control unit (03) in order to authenticate an identification signal transmitter, wherein the door control unit (04, 09) is actuated by the proximity sensor (06, 10) with the control signal in such a way that the door control unit (04, 09) is changed from a first operating state into a second operating state, **characterized in that** the access system (01) comprises at least one further door control unit (04, 09), wherein, after a first door control unit (09) has been actuated, a second door control unit (04) is actuated by means of control signals of the first door control unit (09), and wherein, after actuation has taken place, the second door control unit (04) is also changed from a first operating state into a second operating state.

2. Method according to Claim 1, **characterized in that** the bus system is operatively connected to the central control unit (03) and/or at least one door control unit (04, 09), wherein the control signal is transmitted to at least one door control unit (04, 09) without being directed via the bus system, in such a way that the bus system remains in the state of rest during the actuation of at least one door control unit (04, 09).

## Revendications

1. Procédé pour réaliser un accès sans clé depuis au moins une portière de véhicule (05, 08) au moyen d'un système d'accès (01) comprenant au moins un module de commande central (03) pour émettre et recevoir des signaux de commande, au moins un module de commande de portière (04, 09) pour déverrouiller et/ou verrouiller une portière de véhicule (05,08), au moins un détecteur de proximité (06, 10) pour détecter un objet qui se trouve à proximité immédiate du détecteur de proximité (06, 10), le détecteur de proximité (06, 10) délivrant un signal de commande lors de la détection de l'objet, ainsi qu'un système de contrôle (07, 11) qui communique au moins avec le module de commande central (03) pour authentifier un codeur d'identification, le module de commande de portière (04, 09) étant commandé par le détecteur de proximité (06, 10) avec le signal de commande de telle sorte que le module de commande de portière (04, 09) est amené d'un premier état opérationnel dans un deuxième état opérationnel, **caractérisé en ce que** le système d'accès (01) comprend au moins un module de commande de portière (04, 09) supplémentaire, un deuxième module de commande de portière (04) étant commandé par les signaux de commande d'un premier module de commande de portière (09) après une commande réussie du premier module de commande de portière (09) et, après une commande réussie, le deuxième module de commande de portière (04) étant lui aussi amené d'un premier état opérationnel dans un deuxième état opérationnel.

2. Procédé selon la revendication 1, **caractérisé en ce que** le système de bus est en liaison active avec le module de commande central (03) et/ou au moins un module de commande de portière (04, 09), le signal de commande étant transmis à au moins un module de commande de portière (04, 09) sans être acheminé sur le système de bus de telle sorte que le système de bus reste à l'état de repos pendant la commande d'au moins un module de commande de portière (04, 09).
